# EUROPÄISCHE PATENTSCHRIFT

(11) **EP 0 966 739 B1**
(45) Veröffentlichungstag und Bekanntmachung des Hinweises auf die Patenterteilung: **05.06.2002**
(21) Anmeldenummer: 98914859.8
(22) Anmeldetag: 03.03.1998
(51) Int. Cl.: G11B 7/26

(54) **SCHMELZKLEBSTOFF ZUR VERKLEBUNG VON DVDS**
HOT-MELT ADHESIVE FOR GLUING DIGITAL VERSATILE DISCS
ADHESIF A FUSION POUR LE COLLAGE DE DISQUES VERSATILES NUMERIQUES

(30) Priorität: 12.03.1997 DE 19710115
(43) Veröffentlichungstag der Anmeldung: 29.12.1999
(73) Patentinhaber: Henkel Kommanditgesellschaft auf Aktien, 40589 Düsseldorf (DE)
(72) Erfinder: BUTTERBACH, Rüdiger, D-45219 Essen (DE); MAASSEN, Ulrike, D-41470 Neuss (DE); KOPANNIA, Siegfried, D-47809 Krefeld (DE); REQUIN, Jean-Louis, F-59940 Estaires (FR)
(86) Internationale Anmeldenummer: EP9801179
(87) Internationale Veröffentlichungsnummer: WO9840883

(56) Entgegenhaltungen:
- EP-A- 0 243 976
- EP-A- 0 735 530
- EP-A- 0 844 608
- DE-A- 3 246 857
- DE-A- 3 840 391
- PATENT ABSTRACTS OF JAPAN vol. 012, no. 231 (P-723), 30. Juni 1988 & JP 63 023239 A (ASAHI CHEM IND CO LTD), 30. Januar 1988

## Beschreibung

Die Erfindung betrifft Schmelzklebstoffe zur Verklebung von sandwichartig aufgebauten DVDs sowie ein Verfahren zur Herstellung von sandwichartig aufgebauten DVD.

Mit "DVD" werden Digital Versatile Disks oder Digital Video Disks bezeichnet. Dies sind optische Speichermedien analog der bekannten CD (Compact Disk). Der wesentliche Unterschied der DVD zur CD ist die erheblich höhere Informationsdichte der gespeicherten Musik-, Bild-, oder Dateninformation bei der DVD. Diese höhere Datenbzw. Informationsdichte des Speichermediums stellt erhöhte Anforderungen an das Herstellverfahren sowie an die dafür verwendeten Materialien.

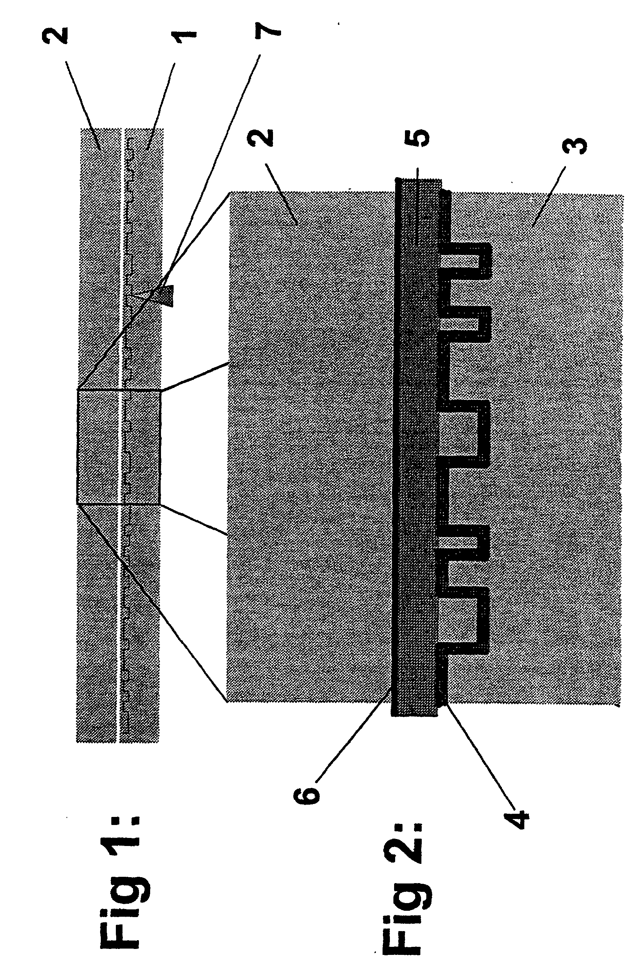

Ein möglicher Aufbau für eine DVD ist in der Figur 1 schematisch dargestellt, es handelt sich hierbei um eine sogenannte "DVD 5", diese DVD besteht im wesentlichen aus 2 Hälften, sie ist einseitig und trägt eine Informationsschicht, ihre Speicherkapazität beträgt 4,7 Gigabyte. In der Figur 1 ist die Schicht, die die Information trägt mit "1" bezeichnet und die keine Information tragende Deckschicht mit "2". Der zur Abtastung der Information erforderliche Laserstrahl ist mit "7" bezeichnet.

Der Aufbau der DVD's unterscheidet sich also von den heute gebräuchlichen und allgemein bekannten CD's (Compact Disk) dadurch, daß die DVD's aus einer "Sandwich"-Konstruktion gebildet werden. Während die CD's im wesentlichen aus einer 1,2 mm dicken Scheibe aus Polycarbonat oder Poly(meth)acrylatharz bestehen, sind die DVD's aus jeweils zwei 0,6 mm dicken Scheiben hergestellt. Hierfür wird heute fast ausschließlich Polycarbonat verwendet. Durch eine verfeinerte Datenstruktur und Laser mit geringer Wellenlänge kann eine Informationsschicht der DVD ca. 4,7 Gigabyte an Information enthalten, während die herkömmliche CD nur etwa 680 Megabyte an Information speichern kann.

Die sandwichartige Konstruktion der DVD bedingt, daß die beiden Schichten 1 und 2 miteinander verbunden werden müssen. Gemäß älterem Stand der Technik wurden zum Verbinden der beiden Schichten miteinander Klebstoffe auf Lösungsmittelbasis verwendet, in neuerer Zeit wurden Schmelzklebstoffe, UV-härtbare lösungsmittelfreie flüssige Klebstoffe sowie UV-vernetzbare Schmelzklebstoffe vorgeschlagen.

Zur Herstellung einer DVD sind im wesentlichen folgende Arbeitsschritte unbedingt notwendig:
- Die Polycarbonat- oder Poly(meth)acrylat-Rohlinge müssen im Spritzgußverfahren hergestellt werden,
- der Rohling 1, der die Informationsschicht trägt, wird mit einer reflektierenden Schicht beschichtet. Dies ist in der Regel eine im Vakuum aufgedampfte Metallschicht, z.B. Aluminium.
- Diese reflektierende Schicht muß unmittelbar nach der Herstellung gegen Korrosion geschützt werden. In einer bekannten Ausführungsform wird daher auf diese Schicht eine Lackschicht aufgebracht, die durch UV-Strahlen ausgehärtet wird. Ein alternatives Verfahren ist die Aufbringung eines Schutzfilms aus einem thermoplastischen Material.
- Der Rohling ohne Informationsschicht 2 kann nach unterschiedlichen Verfahren mit Bild und Textinformationen bedruckt werden.
- Je ein Rohling 1 und 2 werden mit einem Klebstoff verklebt.

Die DE-A-3224647 beschreibt ein Herstellverfahren für optische Videoplatten bzw. digitale Tonplatten. Dort wird vorgeschlagen, daß die die Information tragende Schicht nach der Beschichtung mit einem reflektierenden Film aus Aluminium einen Schutzfilm aus einem wärmeschmelzenden filmbildenden Mittel versehen wird, das bei einer vorbestimmten Temperatur schmilzt und bei Raumtemperatur sich verfestigt. In einer Ausführungsform ist dieses wärmeschmelzende filmbildende Mittel gleichzeitig der Klebstoff zum Verbinden der beiden Plattensubstrathälften. In einer weiteren Ausführungsform wird dieses filmbildende Mittel mit einem weiteren Klebstoff beschichtet, der bei Raumtemperatur klebrig ist, mit Hilfe dieses Klebstoffes werden die beiden Plattensubstrate miteinander verbunden. Die DE-A-3224647 macht keine Angaben über die Zusammensetzung des wärmeschmelzbaren filmbildenden Mittels oder des bei Raumtemperatur klebrigen Klebstoffes. Außerdem sind der Lehre der DE-A-3224647 keine Hinweise zu entnehmen, ob diese klebenden Mittel auch zur Herstellung der DVD's geeignet sind.

Die DE-A-3246857 beschreibt eine optische Platte, die ein Paar von Substraten umfaßt, von denen mindestens eines auf einer Oberfläche gebildete Informationsvertiefungen besitzt. Auf dieser Schicht der Informationsvertiefungen ist eine metallische Schicht eines Reflektionsfilms aufgebracht, auf diese metallische Reflektionsschicht ist wiederum eine Harzschutzschicht aufgebracht. Auf dieser Harzschutzschicht befindet sich eine Kleberschicht, die zum Verbinden der beiden Substrathälften dient. Die DE-A-3246857 schlägt vor, daß als Kleber Schmelzklebstoffe verwendet werden, die als Grundpolymer eine Mischung aus einem oder mehreren thermoplastischen Elastomeren enthalten. Der Lehre der DE-A-3246857 kann weiterhin entnommen werden, daß die dort beschriebenen Schmelzklebstoffe übliche klebrigmachende Harze sowie Additive, beispielsweise Füllmaterialien, Antioxidantien oder UV-Absorber enthalten um deren Wärme- und Witterungsbeständigkeit zu erhöhen. Es wird weiterhin gesagt, daß die Schmelzviskosität des Klebers einen Wert von 1.000 Poise bei 160 ° C nicht überschreiten soll, damit der Klebstoff keine nachteiligen Wirkungen auf den dampfbeschichteten metallischen Film ausübt. Über eine Eignung dieser Klebstoffe zur Herstellung von DVD's werden keine Angaben gemacht.

Gemäß der Lehre der DE-A-3840391 ist die Verwendung von Schmelzklebstoffen bei der Verklebung von Substratpaaren zur Herstellung von Video-Disk's bzw. digitalen Audio-Disk's wegen ihrer geringen Wärmestabilität problematisch. Die Verwendung von UVhärtbaren Monomer-Zusammensetzungen als Klebstoff kann dieser Lehre zufolge Korrosion des Substrats bewirken. Die DE-A-3840391 schlägt zur Verklebung der Substratpaare bei der Herstellung von Video-Disk's die Verwendung von UV-vernetzbaren Schmelzklebstoffen vor. Es werden keine Angaben darüber gemacht, ob diese UV-vernetzbaren Schmelzklebstoffe zur Herstellung von DVD's geeignet sind.

Wie bereits eingangs erwähnt, zeichnet sich die DVD gegenüber den bekannten CD's bzw. optischen Disks (auch Laserdisk genannt) durch eine höhere Daten- bzw. Informationsdichte des Speichermediums aus, weshalb sie höhere Anforderungen an das Herstellverfahren sowie die dafür verwendeten Materialien, z.B. Klebstoffe stellt. UVhärtende Klebstoffe neigen beispielsweise bei schlagartiger Belastung zu Adhäsionsversagen, da sie nach Aushärtung meist sehr spröde sind. Ebenso weisen die meisten UV-härtenden Klebstoffe sowie andere Reaktionsklebstoffe einen relativ hohen Eigenschrumpf aus, durch die hieraus resultierende Krafteinwirkung des Klebstoffes auf die Reflexionsschicht kann es zur Beeinträchtigung des Informationsgehaltes und der Betriebssicherheit der DVD kommen.

Ausgehend von diesem Stand der Technik galt es, einen Klebstoff bereitzustellen, der eine möglichst wirtschaftliche Herstellung der DVD's ermöglicht ohne die Nachteile der UV-härtenden Klebstoffe bzw. der bisher bekannten Schmelzklebstoffe zu haben.

Die Lösung der Aufgabe ist den Patentansprüchen zu entnehmen. Sie beruht im wesentlichen auf der Verwendung eines pigmentierten Schmelzklebstoffes mit einer Schmelzviskosität von mindestens 100 000 mPas gemessen nach ASTM D 3632 bei 160 °C.

Der pigmentierte Schmelzklebstoff kann eine Dreifachfunktion erfüllen:
- Verläßliches Verbinden der beiden Substrathälften
- Korrosionsschutz für die reflektierende (Metall)Schicht, so daß die Aufbringung einer separaten Korrosionsschutz-Schicht auf die reflektierende Schicht entfallen kann
- zusätzlich kann dieser pigmentierte Schmelzklebstoff als deckender und kontrasterhöhender Hintergrund für eine auf die Substratschicht 2 spiegelbildlich aufgebrachte Druckbild-Schicht dienen, so daß die Aufbringung eines weiteren deckenden Hintergrunddruckes eingespart werden kann.

Die erfindungsgemäß zu verwendenden Schmelzklebstoffe bestehen dabei aus den an sich bekannten Aufbaukomponenten thermoplastisches polymeres Bindemittel, klebrigmachende Harze, ggf. Weichmacher, Stabilisatoren/Antioxidantien, ggf. Füllstoffe oder Streckmittel sowie für die bevorzugte Ausführungsform Pigmente und/oder ggf. lösliche Farbstoffe.

Als polymere Bindemittel können dabei thermoplastische Elastomere, Polyamide, Ethylencopolymere, Polyolefine oder Polyester mit hohem amorphen Anteil eingesetzt werden. Beispiele für thermoplastische Elastomere sind thermoplastische Polyurethane (TPU), die in der Regel auf der Basis aromatischer Diisocyanate aufgebaut sind; insbesondere eignen sich Blockcopolymere vom A-B-, A-B-A-, A-(B-A)ₙ-B- sowie (A-B)ₙ-Y-Typ, worin A einen aromatischen Polyvinylblock darstellt und der B-Block einen gummiartigen Mittelblock umfaßt, der teilweise hydriert sein kann. Beispiele für derartige Blockcopolymere enthalten als A einen Polystyrolblock und B einen im wesentlichen kautschukartigen Polybutadien- oder Polyisoprenblock, Y kann eine mehrwertige Verbindung sein und n eine ganze Zahl von mindestens 3. Zur Verbesserung der Wärmestabilität kann ggf. der Mittelblock B (d.h. der Polybutadien- bzw. Polyisoprenblock) teilweise hydriert sein, wodurch zumindestens ein Teil der ursprünglich vorhandenen Doppelbindungen entfernt wird. Derartige Blockcopolymere werden auch als S-B-S- (Styrol-Butadien-Styrol-)Copolymer oder als S-I-S-(Styrol-Isopren-Styrol)Copolymer bzw. als S-E-B-S-(Styrol-Ethylen-Butadien-Styrol)-Copolymer von diversen Herstellern angeboten.

Als Polyamide eignen sich die Kondensationsprodukte aus dimerisierten Fettsäuren und Polyaminen, derartige Polyamide werden von der Firma Henkel unter dem Handelsnamen "Macromelt" bzw. "Reamide" angeboten. Als Ethylencopolymere eignen sich die folgenden als Rohstoffbasis für Schmelzklebstoffe bekannten Ethylen-Vinylacetat-Copolymeren, Ethylen-Ethylacrylat-Copolymeren, Ethylen-Methylacrylat-, Ethylen-Methylmethacrylat- oder Ethylen-Ethylmethacrylat-Copolymeren sowie Co- oder Terpolymere des Ethylens mit weiteren olefinischen ungesättigten Monomeren. Beispiele für Polyolefine sind das Polyisobuten, sowie die weitgehend amorphen Poly-α-Olefine, die aus den Monomeren Ethylen, Propylen und/oder Butylen bzw. Isobutylen sowie ggf. weiteren olefinisch ungesättigten Monomeren aufgebaut sind.

Der Zusatz von klebrigmachenden Harzen dient bekanntermaßen zur Erhöhung der Klebrigkeit der Schmelze insbesondere bei der Verarbeitungstemperatur und zur Adhäsionssteigerung. Beispiele für klebrigmachende Harze, die bei den erfindungsgemäß zu verwendenden Klebstoff-Zusammensetzungen einsetzbar sind, sind Kolophoniumderivate, Tallöl, Tallölederivate, Kolophoniumesterharze, natürliche und synthetische Terpene, Terpen-Phenolharze und aliphatische aromatische oder gemischt aliphatisch-aromatische klebrigmachende Kohlenwasserstoff-Harze.

Die einzusetzenden Weichmacher richten sich im wesentlichen nach der verwendeten Polymerkomponente. Beispiele für Weichmacher sind Prozeßöle, insbesondere naphtenische Prozeßöle, Paraffinöle, Rizinusöl, niedermolekulare Polybutene oder Polyisobutylene oder Polyisoprene sowie Dialkyl- oder Alkylaryl-Ester der Phthalsäure.

Als Stabilisatoren bzw. Antioxidantien zur Verminderung des oxidativen Abbaus sind eine Vielzahl der handelsüblichen Antioxidantien einsetzbar, Beispiele hierfür sind sterisch gehinderte Phenole und/oder Thioether und dergleichen. Es kann dabei von Vorteil sein, 2 oder mehr Antioxidantien unterschiedlicher chemischer Zusammensetzung zu kombinieren um besonders gute Stabilität zu erzielen.

Die in der DE-A-4226081 offenbarten wärmefesten und in der Kälte schlagzähen Schmelzklebstoffe auf Basis von Polyolefinen eignen sich für die erfindungsgemäße Verwendung und sind damit ausdrücklich Bestandteil dieser Erfindung.

Für die bevorzugte Ausführungsform der Verwendung der Schmelzklebstoffe zur Herstellung von DVD's enthalten diese Pigmente, insbesondere Weißpigmente, besonders bevorzugt ist Titandioxid, zur Erzielung anderer farbiger Hintergründe sind jedoch auch andere Farbpigmente z.B. auf der Basis von Eisenoxiden ggf. in Kombination mit Titandioxid einzusetzen. Es ist auch möglich, lösliche Farbstoffe ggf. in Kombination mit Pigmenten einzusetzen.

Die erfindungsgemäße Verwendung des Schmelzklebstoffes soll im folgenden mit Hilfe der Figur 2 in ihren wesentlichen Arbeitsschritten erläutert werden:
1.)
   Die beiden Substratrohlinge, heute bestehen sie im wesentlichen aus Polycarbonat, werden im Spritzgußverfahren hergestellt,
2.)
   die Substrathälfte 3, die im Spritzgußverfahren die Informationsschicht in Form von Vertiefungen erhalten hat, wird mit einer reflektierenden Schicht beschichtet. Dies ist in aller Regel eine metallische Schicht, z.B. aus Aluminium, das im Vakuum aufgedampft wird.
3.)
   Die Substrathälfte 2, die keine Informationsschicht enthält, kann nach unterschiedlichen Verfahren auf der Innenseite mit bildlichen Darstellungen bzw. Textinformationen bedruckt werden. Beispielsweise kann die Innenseite mit einem mehrfarbigen spiegelbildlichen Druck versehen werden.
4.)
   Sowohl die mit der Metallschicht 4 versehene Substrathälfte 3, die die Informationsschicht trägt als auch die Substrathälfte 2, die ggf. das Durckbild 6 enthält, werden mit dem Schmelzklebstoff beschichtet (5). Daran schließt sich das Fügen der beiden Substrathälften zur kompletten DVD an.

Die erfindungsgemäß zu verwendenden Schmelzklebstoffe werden dabei üblicherweise bei Auftragstemperaturen von mindestens 140 °C, vorzugsweise 160 °C in der Regel im Rollenauftragsverfahren auf die Substrathälften in einer Schichtdicke von > oder = 30 µm aufgetragen. Hierbei haben die hohen Schmelz-Viskositäten von über 100 000 mPas sich als sehr vorteilhaft erwiesen, da auch bei den notwendigen sehr hohen Verarbeitungsgeschwindigkeiten der Schmelzklebstoff sauber aufgetragen werden kann, ohne daß es zum Austritt des Klebstoffes über die äußeren Randbereiche der DVD's kommt. Außerdem wird bei diesen hohen Viskositäten die Bildung eines Fadenzuges vermieden. Die Schmelzklebstoffe weisen fernerhin eine sehr hohe Kohäsion auf, dadurch ergibt sich für die so hergestellte DVD eine gute und schnelle Rückstellkraft nach Biegebelastung beim Gebrauch bzw. der Handhabung der DVD.

Gegenüber den UV-härtenden Klebstoffen des Standes der Technik bietet die erfindungsgemäße Verwendung der Schmelzklebstoffe die folgenden weiteren Vorteile:
- Schmelzklebstoffe sind mindestens um den Faktor 4 wirtschaftlicher. Auch die Auftragsgeräte für Schmelzklebstoffe sind billiger als die für UV-härtenden Systeme notwendigen Auftragsgeräte.
- Es besteht die Möglichkeit der Einfärbung oder Pigmentierung der Klebstoffe, dadurch ergeben sich vielfältige Möglichkeiten in der Gestaltung der DVD.
- Schmelzklebstoffe weisen eine gutes Haftverhalten insbesondere bei schlagartiger Belastung auf, das gilt ganz besonders bei niedrigen Temperaturen.
- Schmelzklebstoffe können Ungenauigkeiten bzw. Formabweichungen der Polycarbonatsubstrate besser ausgleichen.
- Normalerweise fällt bei der Verarbeitung von Schmelzklebstoff während der laufenden Produktion keinerlei Abfall an.
- Es treten keine gesundheitsschädliche Gase wie z.B. Ozon oder Monomerdämpfe auf.
- Bei einem Produktwechsel oder bei Produktionsstopps gibt es keine Entsorgungsprobleme mit den Schmelzklebstoffresten. Solche Reste können in kleinen Mengen praktisch als Hausmüll entsorgt werden.

## Patentansprüche

1. Verwendung von Schmelzklebstoffen mit einer Schmelzviskosität von mindestens 100 000 mPas gemessen nach ASTM D 3632 bei 160°C zur Verklebung von sandwichartig aufgebauten Digital Video Disks (DVD), **dadurch gekennzeichnet, daß** der Schmelzklebstoff pigmentiert ist und daß die Schmelzklebstoffschicht 5 gleichzeitig als Korrosionsschutz für die reflektierende Schicht 4 und als deckender und Kontrast-erhöhender Hintergrund für die Druckbild-Schicht 6 dient.

2. Verwendung gemäß Anspruch 1, **dadurch gekennzeichnet, daß** als Schmelzklebstoff ein Klebstoff auf Basis von thermoplastischen Elastomeren, Polyamiden, Ethylencopolymeren, Polyestern und/oder Polyolefinen verwendet wird.

3. Verwendung gemäß einem der vorhergehenden Ansprüche, **dadurch gekennzeichnet, daß** der Schmeizklebstoff noch weitere, an sich bekannte Bestandteile ausgewählt aus der Gruppe der klebrigmachenden Harze, Weichmacher, Haftvermittler, Stabilisatoren/Antioxidantien und/oder Füllstoffe enthält.

4. Verfahren zur Herstellung von sandwichartig aufgebauten Digital Video Disks (DVD) **gekennzeichnet durch** die Verfahrensschritte
(a) Aufbringen der Informationsschicht auf die Schicht 1, hieraus resultiert die Informationsschicht 3,
(b) Beschichten der Informationsschicht mit einer das Licht reflektierenden Metallschicht 4,
(c) Beschichten der Metallschicht (4) mit einer Schicht eines pigmentierten Schmelzklebstoffes gemäß Anspruch 1,
(d) Bedrucken der Innenseite der Scheibe 2 mit einem Druckbild 6.
(e) ggf. Beschichten der Druckbildschicht 6 mit einer Schmelzklebstoff-Schicht 5
(f) Verkleben der Schichten 1 und 2 mit Hilfe der Schmelzklebstoff-Schicht(en) 5

5. Digital Video Disk (DVD), **dadurch gekennzeichnet, daß** sie unter Verwendung eines pigmentierten Schmelzklebstoffes gemäß Anspruch 1 bis 3 hergestellt wurde.

## Claims

1. The use of hotmelt adhesives with a melt viscosity of at least 100,000 mPas, as measured in accordance with ASTM D 3632 at 160°C, for bonding sandwich-type digital video discs (DVDs), **characterized in that** the hotmelt adhesive is pigmented and **in that** the hotmelt adhesive layer 5 also provides corrosion control for the reflective layer 4 and serves as a covering and contrast-increasing background for the printed graphics layer 6.

2. The use claimed in claim 1, **characterized in that** an adhesive based on thermoplastic elastomers, polyamides, ethylene copolymers, polyesters and/or polyolefins is used as the hotmelt adhesive.

3. The use claimed in either of the preceding claims, **characterized in that** the hotmelt adhesive contains other constituents known per se selected from the group of tackifying resins, plasticizers, coupling agents, stabilizers/antioxidants and/or fillers.

4. A process for the production of sandwich-type digital video discs (DVDs), comprising the steps of
(a) applying the information layer to the layer 1 to form the information layer 3,
(b) coating the information layer with a light-reflecting metal layer 4,
(c) coating the metal layer (4) with a layer of a pigmented hotmelt adhesive according to claim 1,
(d) printing the inside of the disc 2 with text/graphics 6,
(e) optionally coating the text/graphics layer 6 with a layer 5 of hotmelt adhesive,
(f) bonding the layers 1 and 2 with the hotmelt adhesive layer(s) 5.

5. A digital video disc (DVD), **characterized in that** it was produced using a pigmented hotmelt adhesive according to claims 1 to 3.

## Revendications

1. Application d'adhésif fusible avec une viscosité de fusion d'au moins 100 000 mPas mesurée selon la norme ASTM D 3632 à 160°C pour coller des disques vidéo numériques (DVD) à structure en sandwich,
**caractérisée en ce qu'**
on pigmente l'adhésif fusible et la couche d'adhésif fusible (5) constitue en même temps une protection contre la corrosion de la couche réfléchissante (4) et comme fond de couverture et d'augmentation du contraste de la couche d'impression (6).

2. Application selon la revendication 1,
**caractérisée en ce que**
comme adhésif fusible, on utilise un adhésif à base d'élastomères thermoplastiques, de polyamides, d'éthylènecopolymères, de polyesters et/ou de polyoléfines.

3. Application selon l'une des revendications précédentes,
**caractérisée en ce que**
l'adhésif fusible contient encore d'autres composants connus en soi choisis dans le groupe des résines rendant collantes, des plastifiants, des agents d'accrochage, des stabilisateurs et des antioxydants et/ou des charges.

4. Procédé de fabrication d'un disque numérique à structure en sandwich (DVD),
**caractérisé par** les étapes suivantes :
(a) on applique la couche d'informations sur la couche (1) pour obtenir la couche d'informations (3),
(b) on revêt la couche d'informations d'une couche métallique (4) réfléchissant la lumière,
(c) on revêt la couche métallique (4) d'une couche d'adhésif fusible pigmenté selon la revendication 1,
(d) on imprime la face intérieure du disque (2) avec une image d'impression (6),
(e) le cas échéant, on revêt la couche d'impression (6) d'une couche d'adhésif fusible (5),
(f) on colle les couches (1) et (2) à l'aide des couches d'adhésif fusible (5).

5. Disque vidéo numérique (DVD),
**caractérisé en ce qu'**
il est fabriqué par application d'un adhésif fusible pigmenté selon l'une quelconque des revendications 1 à 3.
